# EUROPEAN PATENT APPLICATION

(11) **EP 4 852 351 A1**
(43) Date of publication of application: **09.12.2026**
(21) Application number: 24921755.5
(22) Date of filing: 16.12.2024
(51) Int. Cl.: H04J 11/00

(54) **INTERFERENCE CANCELLATION METHOD, DEVICE AND STORAGE MEDIUM**

(30) Priority: 02.02.2024 CN 202410157486
(71) Applicant: ZTE Corporation, Shenzhen, Guangdong 518057 (CN)
(72) Inventor: YAO, Kun, Shenzhen, Guangdong 518057 (CN); XUE, Fei, Shenzhen, Guangdong 518057 (CN); LIU, Wenhao, Shenzhen, Guangdong 518057 (CN); ZHOU, Wubin, Shenzhen, Guangdong 518057 (CN); ZHANG, Chenchen, Shenzhen, Guangdong 518057 (CN)
(74) Representative: Aipex B.V.
(86) International application number: PCT/CN2024/139491
(87) International publication number: WO 2025/161733

(57) **Abstract**

Provided are an interference cancellation method, a device and a storage medium. The method includes: receiving, by a current node, pilot information and/or scheduling information of an interfering node; and performing interference cancellation according to the pilot information and/or the scheduling information. Pilot information and/or scheduling information is indicated to cancel interference so that the interference cancellation effect can be improved.

## Description

### TECHNICAL FIELD

The present application relates to the field of communication technologies, and in particular, to an interference cancellation method, a device and a storage medium.

### BACKGROUND

Currently, in the actual deployment of 5G networks, problems of inter-cell interference and intra-cell interference still exist. During the design process of a minimum mean square error-interference rejection combining (MMSE-IRC) receiver, both the covariance matrix of noise and the covariance matrix of interference are considered. The receiver can not only suppress interference between data streams, but can also suppress inter-cell interference to a certain extent.

The MMSE-IRC algorithm optimizes and improves the covariance matrix of interference and the covariance matrix of noise, but does not fully utilize the information of the interference channel. The covariance matrix is only an average result among multiple physical resource blocks (PRBs), and channel estimation of a serving cell is performed under the influence of interference. Therefore, the interference suppression effect of this algorithm is ordinary.

### SUMMARY

Embodiments of the present application provide an interference cancellation method, a device, and a storage medium. Pilot information and/or scheduling information is indicated to cancel interference so that effects of the interference cancellation can be improved.

To achieve the preceding object, embodiments of the present application provide an interference cancellation method including the following:

A current node receives pilot information and/or scheduling information of an interfering node; and interference cancellation is performed according to the pilot information and/or the scheduling information.

To achieve the preceding object, embodiments of the present application provide a computer device. The computer device includes a memory, a processor, and a computer program stored on the memory and executable on the processor. The processor, when executing the program, implements the interference cancellation method according to the embodiments of the present application.

To achieve the preceding object, embodiments of the present application provide a computer-readable storage medium storing a computer program. The computer program, when executed by a processor, implements the interference cancellation method according to the embodiments of the present application.

Embodiments of the present application provide an interference cancellation method, a device, and a storage medium. A current node receives pilot information and/or scheduling information of an interfering node; and interference cancellation is performed according to the pilot information and/or the scheduling information. The pilot information and/or the scheduling information is indicated to cancel interference so that the interference cancellation effect can be improved.

### BRIEF DESCRIPTION OF DRAWINGS

FIG. 1 is a diagram illustrating the structure of an interference cancellation method according to an embodiment of the present application.
FIG. 2 is a diagram illustrating an example of indicating pilot information by new medium access control (MAC) control element (CE) signaling according to an embodiment of the present application.
FIG. 3 is a diagram illustrating an example of indicating scheduling information by new MAC CE signaling according to an embodiment of the present application.
FIG. 4 is a diagram illustrating an example of indicating a modulation and coding scheme table and a modulation order by new MAC CE signaling according to an embodiment of the present application.
FIG. 5 is a diagram illustrating the structure of an interference cancellation apparatus according to an embodiment of the present application.
FIG. 6 is a diagram illustrating the structure of a computer device according to an embodiment of the present application.

### DETAILED DESCRIPTION

To illustrate the object, solutions, and advantages of the present application more clearly, embodiments of the present application are described hereinafter in detail in conjunction with drawings. It is to be noted that if not in collision, embodiments of the present application and features therein may be combined with each other in any manner.

It is to be understood that the specific embodiments described herein are intended to explain the present application and not to limit the present application.

Suffixes such as "module", "component", or "unit" used for indicating elements in the subsequent description are used only for facilitating the description of the present application and have no particular meaning in themselves. Therefore, "module", "component", or "unit" may be used in a mixed manner.

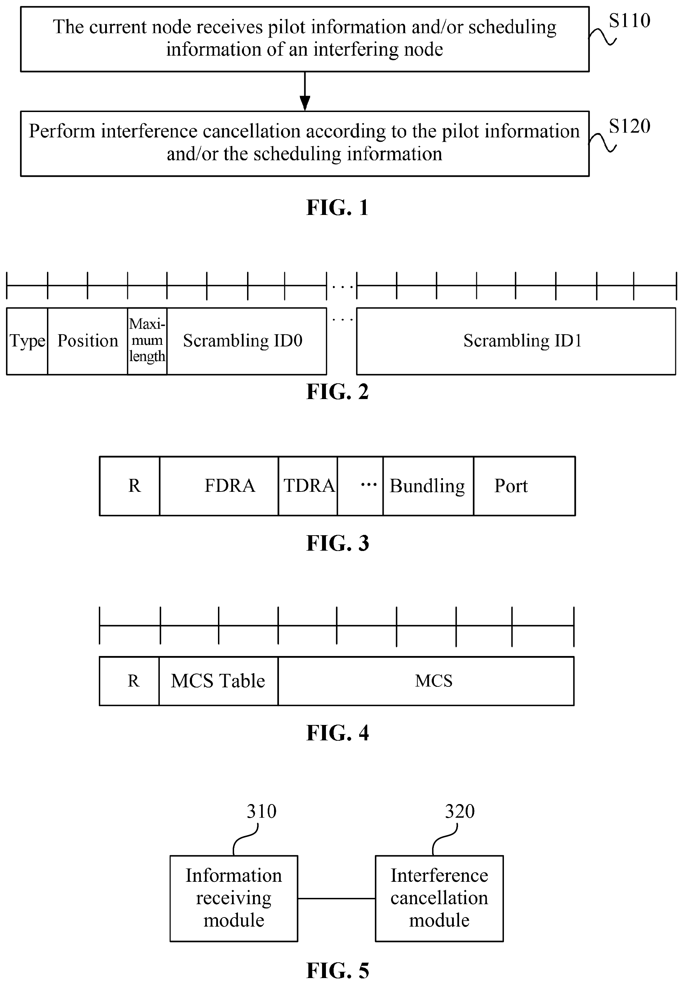

FIG. 1 is a diagram illustrating the structure of an interference cancellation method according to an embodiment of the present application. The method may be performed by a communication node. As shown in FIG. 1, the method includes S110 and S120.

In S110, a current node receives pilot information and/or scheduling information of an interfering node.

The current node may include any one of a serving cell, a target user equipment (target UE), a transmission reception point (TRP), an evolved Node B (eNB), a radio network controller (RNC), a Node B (NB), an integrated access and backhaul (IAB), a repeater, and the like. The interfering node may include an interfering cell or an interfering user equipment. The pilot information includes at least one of the following items: a demodulation reference signal type (DMRS type), an additional position of a DMRS, the maximum length (max length) of a DMRS, a scrambling identity0 (ID0) (scramblingID0) of a DMRS, or a scrambling ID1 (scramblingID1) of a DMRS. scramblingID represents a scrambling ID of the DMRS. The scheduling information may include at least one of the following items: frequency-domain resource position information of a physical downlink shared channel (PDSCH), time-domain resource position information of a PDSCH, antenna port information, or a PRB bundling size.

In this embodiment, an advanced receiver needs to perform channel estimation on the interfering node to obtain channel information of the interfering node for interference cancellation. To effectively estimate the channel information of the interfering node, the pilot information of the interfering node needs to be obtained. The advanced receiver may be an enhanced minimum mean square error-interference rejection combining (EMMSE-IRC) linear receiver or a maximum likelihood (ML) nonlinear receiver.

In an embodiment, a manner of receiving the pilot information of the interfering node may be receiving pilot information of the interfering node indicated by existing radio resource control (RRC) signaling. Illustratively, the pilot information indicated by the RRC signaling is as follows: a demodulation reference signal type {type2}; an additional position {pos0, pos1, pos3} of the demodulation reference signal; the maximum length {len2} of the demodulation reference signal; a scrambling ID0; and a scrambling ID1.

In an embodiment, a manner of receiving the pilot information of the interfering node may be receiving pilot information of the interfering node indicated by new RRC signaling.

In an embodiment, a manner of receiving the pilot information of the interfering node may be receiving pilot information of the interfering node indicated by existing downlink control information (DCI) signaling.

A manner of indicating the pilot information by the existing DCI may be indicating the pilot information by extending a field of an existing DCI format (such as format 1_0 or format 1_1). Illustratively, a field of the existing DCI format is extended to configure 36 bits for indicating the pilot information, and the 36 bits are as follows: the demodulation reference signal type: 1 bit, the additional position of the demodulation reference signal: 2 bits; the maximum length of the demodulation reference signal: 1 bit; the scrambling ID0: 16 bits; the scrambling ID1: 16 bits; and other information: 0 bit.

In an embodiment, a manner of receiving the pilot information of the interfering node may be receiving pilot information of the interfering node indicated by new DCI signaling.

A new DCI format (format 1_x) may be used to indicate the pilot information. The DCI format 1_x is used to schedule one or more PDSCHs in a cell. The pilot information is transmitted through the DCI format 1_x, and a cyclic redundancy check (CRC) is scrambled by a cell-radio network temporary identifier (C-RNTI) or a configured scheduling-radio network temporary Identifier (CS-RNTI) or a modulation and coding scheme control radio network temporary identifier (MCS-C-RNTI). 36 bits are configured through the new DCI format to indicate the pilot information as follows: the demodulation reference signal type: 1 bit, the additional position of the demodulation reference signal: 2 bits; the maximum length of the demodulation reference signal: 1 bit; the scrambling ID0: 16 bits; the scrambling ID1: 16 bits; and other information: 0 bit.

In an embodiment, a manner of receiving the pilot information of the interfering node may be receiving pilot information of the interfering node indicated by new MAC CE signaling.

Illustratively, FIG. 2 is a diagram illustrating an example of indicating pilot information by new MAC CE signaling according to an embodiment. As shown in FIG. 2, type represents the demodulation reference signal type; position represents the additional position of the demodulation reference signal; maxLength represents the maximum length of the demodulation reference signal; scramblingID0 represents a scrambling ID0; and scramblingID1 represents a scrambling ID1. In this embodiment, a new MAC subheader needs to be defined for the new MAC CE signaling.

In an embodiment, a manner of receiving the scheduling information of the interfering node may be receiving scheduling information of the interfering node indicated by existing RRC signaling.

A manner of indicating the scheduling information by the existing RRC signaling may be indicating the scheduling information by extending a field in the RRC signaling.

In an embodiment, a manner of receiving the scheduling information of the interfering node may be receiving scheduling information of the interfering node indicated by new RRC signaling.

Specifically, a manner of receiving the scheduling information of the interfering node indicated by the new RRC signaling may be receiving relative information of a frequency-domain resource position of the interfering node indicated by the new RRC signaling.

The relative information of the frequency-domain resource position includes an offset (PointAOffset) of a frequency-domain starting position of the interfering node relative to a reference frequency-domain position pointA of the current node, or an offset (PRB0Offset) of a frequency-domain starting position of the interfering node relative to a frequency-domain starting position PRB0 of the current node. Illustratively, the new RRC signaling indicating the scheduling information may be as follows: the offset (PointAOffset) relative to the reference frequency-domain position of the current node or the offset (PRB0Offset) relative to the frequency-domain starting position PRB0 of the current node; frequency-domain resource configuration information (FrequencyDomainResourceAllocationRIV); time-domain resource configuration information (TimeDomainResourceAllocation); port information (Antenna ports); and a PRB (prb-BundlingType) bundling size.

In an embodiment, a manner of receiving the scheduling information of the interfering node may be receiving scheduling information of the interfering node indicated by existing DCI signaling.

Indicating the scheduling information by the existing DCI signaling may be understood as indicating the scheduling information by the existing DCI format 1_0 or the existing DCI format 1_1.

Specifically, a manner of receiving the scheduling information of the interfering node indicated by the existing DCI signaling may be receiving scheduling information of the interfering node jointly indicated by extended information of the existing DCI format 1_0 and RRC higher-layer signaling.

Information that needs to be extended in the DCI format 1_0 includes frequency-domain resource position information, where the number of bits occupied by the frequency-domain resource position information is $\left⌈{log}_{2}\left({N}_{RB}^{DL , BWP}\left({N}_{RB}^{DL , BWP}+1\right)/2\right)\right⌉$ , and *N*_{R}^{D}_{B}^{L,BWP} may be obtained by querying a standard protocol; time-domain resource position information, occupying 4 bits; a PRB bundling size, where the number of bits occupied by the bundling size is determined by a "PRB bundling size" parameter in the RRC higher-layer signaling (occupying 0 bits if "prb-BundlingType" is not configured or is configured as static bundling, or occupying 1 bit if the "PRB bundling size" is configured as dynamic bundling); and antenna port information, occupying 4, 5, or 6 bits. The required RRC higher-layer signaling includes the PRB bundling size.

Specifically, a manner of receiving the scheduling information of the interfering node indicated by the existing DCI signaling may be receiving scheduling information of the interfering node jointly indicated by extended information of the existing DCI format 1_1 and RRC higher-layer signaling.

Information that needs to be extended in the DCI format 1_1 includes frequency-domain resource position information, time-domain resource position information, antenna port information, and a PRB bundling size.

The number of bits for the frequency-domain resource position information includes the following cases: If a resource type is configured as type0, *N* _{RBG} bits are occupied, where *N* _{RBG} is defined by a standard protocol; if the resource type is configured as type1, $\left⌈{log}_{2}\left({N}_{RB}^{DL , BWP}\left({N}_{RB}^{DL , BWP}+1\right)/2\right)\right⌉$ bits are occupied, where ${N}_{RB}^{DL , BWP}$ may be obtained by querying a standard protocol; and if the resource type is configured as dynamic switching, $max \left(\left⌈{log}_{2}\left({N}_{RB}^{DL , BWP}\left({N}_{RB}^{DL , BWP}+1\right)/2\right)\right⌉, {N}_{RBG}\right) + 1$ bits are occupied. The number of bits occupied by the time-domain resource position information is $\left⌈{log}_{2}\left(I\right)\right⌉$ . If a higher-layer parameter "time-domain resource allocation list (pdsch-TimeDomainAllocationList)" is configured, I is the number of entries of the "time-domain resource allocation list"; otherwise, I is the number of entries in a default table. The antenna port information occupies 4, 5, or 6 bits. The number of bits occupied by the PRB bundling size is determined by the "PRB bundling size" parameter in the RRC higher-layer signaling. If the "PRB bundling size" is not configured or is configured as static bundling, 0 bits are occupied, and if the "PRB bundling size" is configured as dynamic bundling, 1 bit is occupied. The required RRC higher-layer signaling includes resource configuration information, a time-domain resource list, and the PRB bundling size.

In an embodiment, a manner of receiving the scheduling information of the interfering node may be receiving scheduling information of the interfering node indicated by new DCI signaling.

Indicating the scheduling information by the new DCI signaling may be understood as the scheduling information being jointly indicated by a DCI format 1_x and RRC higher-layer signaling. The RRC higher-layer signaling required here is the same as the RRC higher-layer signaling required by the DCI format 1_1, which is not repeated.

In an embodiment, a manner of receiving the scheduling information of the interfering node may be receiving scheduling information of the interfering node indicated by new MAC CE signaling.

Illustratively, FIG. 3 is a diagram illustrating an example of indicating scheduling information by new MAC CE signaling according to an embodiment. As shown in FIG. 3, FDRA represents frequency-domain resource allocation information; TDRA represents time-domain resource allocation information; bundling represents a PRB bundling size; and port represents antenna port information. In this embodiment, a new MAC subheader needs to be defined for the new MAC CE signaling.

In this embodiment, for a nonlinear receiver, modulation information in the scheduling information is further needed. The modulation information includes modulation and coding scheme table (MCS table) information and a modulation order. The nonlinear receiver may be a maximum likelihood (ML) receiver, a sphere detection (SD) receiver, a receiver of QR decomposition associated with the M-algorithm to maximum likelihood detection (QRM-MLD), or the like.

In an embodiment, a manner of receiving the scheduling information of the interfering node may be receiving modulation and coding scheme table information of the interfering node indicated by any one of a newly added information element (IE) in RRC signaling, an extended field of an existing IE in RRC signaling, a new MAC CE, new DCI, and an extended field of existing DCI, and a modulation order of the interfering node indicated by any one of a newly added IE in RRC signaling, an extended field of an existing IE in RRC signaling, a new MAC CE, new DCI, and an extended field of existing DCI.

In an embodiment, the modulation and coding scheme table information (2 bits) may be indicated by a newly added IE in RRC signaling, and the modulation order (5 bits) may be indicated by another newly added IE.

In an embodiment, the modulation and coding scheme table information (2 bits) may be indicated by a newly added IE in RRC signaling, and the modulation order (5 bits) may be indicated by a new MAC CE.

In an embodiment, the modulation and coding scheme table information (2 bits) may be indicated by a newly added IE in RRC signaling, and the modulation order (5 bits) may be indicated by new DCI signaling.

In an embodiment, the modulation and coding scheme table information (2 bits) may be indicated by a new MAC CE, and the modulation order (5 bits) may be indicated by a newly added IE in RRC signaling.

In an embodiment, the modulation and coding scheme table information (2 bits) may be indicated by a new MAC CE, and the modulation order (5 bits) may be indicated by another new MAC CE.

In an embodiment, the modulation and coding scheme table information (2 bits) may be indicated by a new MAC CE, and the modulation order (5 bits) may be indicated by new DCI.

In an embodiment, the modulation and coding scheme table information (2 bits) may be indicated by new DCI, and the modulation order (5 bits) may be indicated by a newly added IE in RRC signaling.

In an embodiment, the modulation and coding scheme table information (2 bits) may be indicated by new DCI, and the modulation order (5 bits) may be indicated by a new MAC CE.

In an embodiment, the modulation and coding scheme table information (2 bits) may be indicated by new DCI, and the modulation order (5 bits) may be indicated by another new DCI.

In an embodiment, the modulation and coding scheme table information and the modulation order may be indicated by an extended field of an existing IE in RRC signaling. The extended field may be represented as "IE NR-InterfCells-AssistInfoList".

In an embodiment, the modulation and coding scheme table information (2 bits) and the modulation order (5 bits) may be indicated by an extended field of existing DCI. A related field may be extended on the basis of the existing DCI format (such as Format 1_0 and Format 1_1).

In an embodiment, the modulation and coding scheme table information (2 bits) may be indicated by a newly added IE in RRC signaling, and the modulation order (5 bits) may be indicated by an extended field of existing DCI.

In an embodiment, the modulation and coding scheme table information (2 bits) may be indicated by a newly added IE in RRC signaling, and the modulation order (5 bits) may be indicated by a new MAC CE.

In an embodiment, the modulation and coding scheme table information (2 bits) may be indicated by a new MAC CE, and the modulation order (5 bits) may be indicated by an extended field of existing DCI.

Illustratively, FIG. 4 is a diagram illustrating an example of indicating modulation and coding scheme table information and a modulation order by new MAC CE signaling according to an embodiment. As shown in FIG. 4, MCS Table represents the modulation and coding scheme table information, and MCS represents a specific modulation scheme. In this embodiment, a new MAC subheader needs to be defined for the new MAC CE signaling.

In this embodiment, information used to indicate the modulation and coding scheme table and the modulation order may be any combination of a newly added IE in RRC signaling, an extended field of an existing IE in RRC signaling, a new MAC CE, new DCI, and an extended field of existing DCI, which is not limited herein.

In S120, interference cancellation is performed according to the pilot information and/or the scheduling information.

In this embodiment, a manner of performing the interference cancellation according to the pilot information and/or the scheduling information may be performing channel estimation on an interfering cell according to the pilot information and/or the scheduling information to obtain a channel estimation result; and performing, by the current node, the interference cancellation based on the channel estimation result.

Specifically, channel estimation is performed on the interfering cell according to the demodulation reference signal type, the additional position of the demodulation reference signal, the maximum length of the demodulation reference signal, the scrambling ID0, the scrambling ID1, and the like in the pilot information, and the time-frequency resource position information, the antenna port information, the PRB bundling size information, the modulation information, and the like in the scheduling information, to obtain the channel estimation result, and then interference cancellation is performed based on the channel estimation result and a linear or nonlinear detection algorithm corresponding to the current node. Illustratively, assuming that the current node is an EMMSE-IRC linear receiver, an enhanced minimum mean square error-interference rejection combining algorithm is used to process the channel estimation result, so as to perform the interference cancellation; if the current node is an ML nonlinear receiver, a maximum likelihood algorithm is used to process the channel estimation result, so as to perform the interference cancellation; if the current node is an SD nonlinear receiver, a sphere detection algorithm is used to process the channel estimation result, so as to perform the interference cancellation; and if the current node is a QRM-MLD nonlinear receiver, a QR decomposition associated with the M-algorithm to maximum likelihood detection is used to process the channel estimation result, so as to perform the interference cancellation. If the current node uses a nonlinear receiver, the nonlinear receiver may include the preceding ML, SD, and QRM-MLD receivers, but is not limited to the preceding several types.

According to the technical solution of this embodiment, a current node receives pilot information and/or scheduling information of an interfering node; and interference cancellation is performed according to the pilot information and/or the scheduling information. The pilot information and/or the scheduling information is indicated to cancel interference so that the effects of the interference cancellation can be improved.

FIG. 5 is a diagram illustrating the structure of an interference cancellation apparatus according to an embodiment of the present application. As shown in FIG. 5, the device includes an information receiving module 310 and an interference cancellation module 320.

The information receiving module 310 is configured to receive pilot information and/or scheduling information of an interfering node through a current node.

The interference cancellation module 320 is configured to perform interference cancellation according to the pilot information and/or the scheduling information.

Optionally, the pilot information includes at least one of the following items: a DMRS type, an additional position of a DMRS, a maximum length of a DMRS, a scrambling ID0 of a DMRS, or a scrambling ID1 of a DMRS.

Optionally, the information receiving module 310 is also configured to receive pilot information of the interfering node indicated by existing RRC signaling; receive pilot information of the interfering node indicated by new RRC signaling; receive pilot information of the interfering node indicated by existing DCI signaling; receive pilot information of the interfering node indicated by new DCI signaling; or receive pilot information of the interfering node indicated by new MAC CE signaling.

Optionally, the scheduling information includes at least one of the following items: frequency-domain resource position information of a PDSCH, time-domain resource position information of a PDSCH, antenna port information, or a PRB bundling size.

Optionally, the information receiving module 310 is also configured to receive scheduling information of the interfering node indicated by existing RRC signaling; receive scheduling information of the interfering node indicated by new RRC signaling; receive scheduling information of the interfering node indicated by existing DCI signaling; receive scheduling information of the interfering node indicated by new DCI signaling; or receive scheduling information of the interfering node indicated by new MAC CE signaling.

Optionally, the information receiving module 310 is also configured to receive relative information of a frequency-domain resource position of the interfering node indicated by new RRC signaling. The relative information of the frequency-domain resource position includes an offset of a frequency-domain starting position of the interfering node relative to a reference frequency-domain position pointA of the current node, or an offset of a frequency-domain starting position of the interfering node relative to a frequency-domain starting position PRB0 of the current node.

Optionally, the information receiving module 310 is also configured to receive scheduling information of the interfering node jointly indicated by extended information of existing DCI format 1_0 and RRC higher-layer signaling; or receive scheduling information of the interfering node jointly indicated by extended information of existing DCI format 1_1 and RRC higher-layer signaling.

Optionally, the information receiving module 310 is also configured to receive scheduling information of the interfering node jointly indicated by new DCI signaling and RRC higher-layer signaling.

Optionally, the scheduling information also includes modulation and coding scheme table information and a modulation order.

Optionally, the information receiving module 310 is also configured to receive modulation and coding scheme table information of the interfering node indicated by any one of a newly added IE in RRC signaling, an extended field of an existing IE in RRC signaling, a new MAC CE, new DCI, and an extended field of existing DCI, and a modulation order of the interfering node indicated by any one of a newly added IE in RRC signaling, an extended field of an existing IE in RRC signaling, a new MAC CE, new DCI, and an extended field of existing DCI.

Optionally, the interfering node includes an interfering cell or an interfering user equipment; and the current node includes any one of a serving cell and a target user equipment.

Optionally, the interference cancellation module 320 is also configured to perform the channel estimation on the interfering cell according to the pilot information and/or the scheduling information to obtain a channel estimation result; and perform the interference cancellation based on the channel estimation result through the current node.

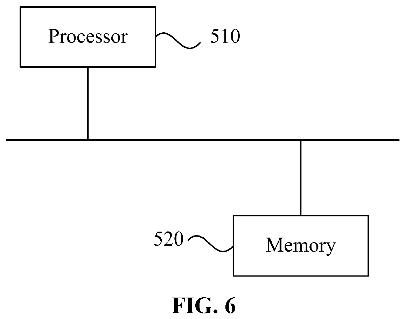

In an embodiment, FIG. 6 is a diagram illustrating the structure of a computer device according to an embodiment of the present application. As shown in FIG. 6, the device provided by the present application includes a processor 510 and a memory 520. One or more processors 510 may be included in the device. One processor 510 is shown as an example in FIG. 6. One or more memories 520 may be provided in the device. One memory 520 is shown as an example in FIG. 6. The processor 510 and the memory 520 in the device may be connected by a bus or in other manners. FIG. 6 shows a connection by the bus as an example. In the embodiment, the device is a computer device.

The memory 520, as a computer-readable storage medium, may be configured to store a software program, a computer-executable program, and a module, such as a program instruction/module (for example, an encoding module and a first sending module in a data transmission apparatus) corresponding to the device in any embodiment of the present application. The memory 520 may include a program storage region and a data storage region. The program storage region may store an operating system and an application program required by at least one function. The data storage region may store data created according to the use of the device. Moreover, the memory 520 may include a high-speed random-access memory and may also include a non-volatile memory such as at least one magnetic disk memory, a flash memory, or another non-volatile solid-state memory. In some examples, the memory 520 may also include memories located remotely relative to the processor 510, and these remote memories may be connected to the device via a network. Examples of the preceding network include but are not limited to, the Internet, an intranet, a local area network, a mobile communication network, and a combination thereof.

The preceding provided device may be configured to execute the interference cancellation method provided in any of the preceding embodiments, and has corresponding functions and effects.

A program stored in the memory 520 may be a program instruction/module corresponding to the interference cancellation method provided in the embodiments of the present application and applied to interference cancellation. The processor 510 runs the software program, the instruction, and the module stored in the memory 520, so as to execute one or more function applications and data processing of the computer device, that is, to implement the association query method applied to data in the preceding method embodiments. It is to be understood that when the preceding device is a receiving end, the interference cancellation method provided in any embodiment of the present application may be executed, and corresponding functions and effects are possessed.

Embodiments of the present application also provide a storage medium including computer-executable instructions. The computer-executable instructions, when executed by a computer processor, are used to execute an interference cancellation method. The method includes receiving, by a current node, pilot information and/or scheduling information of an interfering node; and performing interference cancellation according to the pilot information and/or the scheduling information.

It is to be understood by those skilled in the art that the term "user equipment" covers any suitable type of wireless user equipment, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented using any suitable data storage technology such as, but not limited to, a read-only memory (ROM), a random-access memory (RAM), or an optical memory device and system (a digital video disc (DVD), or a compact disc (CD)). The computer-readable medium may include a non-transitory storage medium. The data processor may be in any type suitable for the local technical environment, for example, but not limited to, a general-purpose computer, a special-purpose computer, a microprocessor, a digital signal processing (DSP), an application-specific integrated circuit (ASIC), a field-programmable gate array (FPGA), and a processor based on a multi-core processor architecture.

The preceding descriptions are only example embodiments of the present application and are not intended to limit the scope of the present application.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source codes or object codes written in any combination of one or more programming languages.

The detailed description of example embodiments of the present application has been provided above through exemplary and non-restrictive examples. However, considering the drawings and the claims, various modifications and adjustments to the preceding embodiments are apparent to those skilled in the art without deviating from the scope of the present application. Accordingly, the proper scope of the present application is determined according to the claims.

## Claims

1. An interference cancellation method, comprising:
receiving, by a current node, at least one of pilot information or scheduling information of an interfering node; and
performing interference cancellation according to the at least one of the pilot information or the scheduling information.

2. The interference cancellation method according to claim 1, wherein the pilot information comprises at least one of: a demodulation reference signal, DMRS, type, an additional position of a DMRS, a maximum length of a DMRS, a scrambling identity0, ID0, of a DMRS, or a scrambling identity1, ID1, of a DMRS.

3. The interference cancellation method according to claim 2, wherein receiving the pilot information of the interfering node comprises at least one of:
receiving pilot information of the interfering node indicated by existing radio resource control, RRC, signaling;
receiving pilot information of the interfering node indicated by new RRC signaling;
receiving pilot information of the interfering node indicated by existing downlink control information, DCI, signaling;
receiving pilot information of the interfering node indicated by new DCI signaling; or
receiving pilot information of the interfering node indicated by new medium access control, MAC, control element, CE, signaling.

4. The interference cancellation method according to claim 1, wherein the scheduling information comprises at least one of: frequency-domain resource position information of a physical downlink shared channel, PDSCH, time-domain resource position information of a PDSCH, antenna port information, or a physical resource block, PRB, bundling size.

5. The interference cancellation method according to claim 4, wherein receiving the scheduling information of the interfering node comprises at least one of:
receiving scheduling information of the interfering node indicated by existing RRC signaling;
receiving scheduling information of the interfering node indicated by new RRC signaling;
receiving scheduling information of the interfering node indicated by existing DCI signaling;
receiving scheduling information of the interfering node indicated by new DCI signaling; or
receiving scheduling information of the interfering node indicated by new MAC CE signaling.

6. The interference cancellation method according to claim 5, wherein receiving the scheduling information of the interfering node indicated by the new RRC signaling comprises:
receiving relative information of a frequency-domain resource position of the interfering node indicated by the new RRC signaling; wherein the relative information of the frequency-domain resource position comprises: an offset of a frequency-domain starting position of the interfering node relative to a reference frequency-domain position pointA of the current node, or an offset of a frequency-domain starting position of the interfering node relative to a frequency-domain starting position PRB0 of the current node.

7. The interference cancellation method according to claim 5, wherein receiving the scheduling information of the interfering node indicated by the existing DCI signaling comprises at least one of:
receiving scheduling information of the interfering node jointly indicated by extended information of existing DCI format 1_0 and RRC higher-layer signaling; or
receiving scheduling information of the interfering node jointly indicated by extended information of existing DCI format 1_1 and RRC higher-layer signaling.

8. The interference cancellation method according to claim 5, wherein receiving the scheduling information of the interfering node indicated by the new DCI signaling comprises:
receiving scheduling information of the interfering node jointly indicated by the new DCI signaling and RRC higher-layer signaling.

9. The interference cancellation method according to claim 4, wherein the scheduling information further comprises a modulation and coding scheme table and a modulation order.

10. The interference cancellation method according to claim 9, wherein receiving the scheduling information of the interfering node comprises:
receiving modulation and coding scheme table information of the interfering node indicated by any one of a newly added information element, IE, in RRC signaling, an extended field of an existing IE in RRC signaling, a new MAC CE, new DCI, and an extended field of existing DCI, and receiving a modulation order of the interfering node indicated by any one of a newly added IE in RRC signaling, an extended field of an existing IE in RRC signaling, a new MAC CE, new DCI, and an extended field of existing DCI.

11. The interference cancellation method according to claim 1, wherein the interfering node comprises an interfering cell or an interfering user equipment; and the current node comprises any one of a serving cell and a target user equipment.

12. The interference cancellation method according to claim 1, wherein performing the interference cancellation according to the at least one of the pilot information or the scheduling information comprises:
performing channel estimation on the interfering node according to the at least one of the pilot information or the scheduling information to obtain a channel estimation result; and
performing, by the current node, the interference cancellation based on the channel estimation result.

13. A computer device, comprising a memory, a processor, and a computer program stored on the memory and executable on the processor, wherein the processor, when executing the computer program, implements the interference cancellation method according to any one of claims 1 to 12.

14. A computer-readable storage medium storing a computer program, wherein the computer program, when executed by a processor, implements the interference cancellation method according to any one of claims 1 to 12.
